# EUROPEAN PATENT SPECIFICATION

(11) **EP 2 853 569 B1**
(45) Date of publication and mention of the grant of the patent: **20.04.2016**
(21) Application number: 14003015.6
(22) Date of filing: 02.09.2014
(51) Int. Cl.: C09D 105/00, C08L 5/00, G10D 9/02

(54) **Method for treating reeds, in particular vegetal reeds**
Methoden zur Behandlung von Rohrblättern, vornehmlich pflanzliche Rohrblätter
Procédé de traitement des anches, en particulier des anches végétales

(30) Priority: 03.09.2013 IT MI20131433
(43) Date of publication of application: 01.04.2015
(73) Proprietor: Musarra Tubi, Vincenzo, 98071 Capo d'Orlando (ME) (IT)
(72) Inventor: Musarra Tubi, Vincenzo, 98071 Capo d'Orlando (ME) (IT)
(74) Representative: Jaumann, Paolo

(56) References cited:
- US-A- 5 379 673

## Description

The present invention relates to a composition, in particular liquid, for the treatment of reeds of vegetable nature, with preservative and regenerating properties, as well as the ability to improve the performance of the reeds, compared to those simply moistened, as is customary.

Many instruments require reeds to produce a sound. Reeds are made of sheets of material of appropriate thickness and shape, which are attached to the mouthpiece of wind instruments to generate sound waves; when invested by a jet of air which is blown into a wind instrument by a musician they vibrate, and they are coupled to the resonant cavity of the instrument in various ways, so as to generate sound waves. There are different types of reeds (simple or double reeds). They can be made of metal or plastic, but, in particular in the field of wind instruments (e.g. clarinet, harmonica, saxophone, oboe, bassoon, English horn, bagpipes, and many others) those of vegetable origin are most popular; they are made from cane (Arundo donax is one of the most frequently used species) or from the bark of certain trees. Reeds of this type offer a better quality of sound, which is softer and more harmonious. Conversely, their use presents a number of significant problems. Firstly, due to the fibrous structure, resulting from organic growth processes, each reed of vegetable origin is different from the other, regardless of the process with which they are made, therefore their quality can only be guaranteed within very wide limits and can only be verified through use. In addition, they are sensitive to environmental factors such as temperature and humidity, so if the quality is satisfactory or even excellent on a given occasion, it may not be so in a subsequent occasion, where environmental conditions are different. Finally, the quality of the sound with a particular reed also depends on how the musician plays, the instrument and type of music. In fact, reeds are often finished by the musician, using appropriate tools, to meet personal requirements, despite the fact that there are many different reed cuts for one same instrument which are divided according to the different degree of hardness. The reeds must be adequately moistened, usually with saliva. All these factors make it impossible to test them in advance resulting in an unpredictable behaviour of the single pieces; therefore, in a box of reeds, only a part will be suitable for use, especially by a professional with more demanding requirements in terms of quality of sound; typically, it may be necessary to discard right away a part of the reeds, which may even equal half a pack. Finally, even in the case of an adequate and relatively stable behaviour of the reeds, it is necessary to replace a reed quite frequently; for example, in the case of a reed for a clarinet, it must be replaced every few days if used for several hours per day, or every few weeks if played less frequently. US 5 379 673 discloses the treatment of reeds with inter alia carboxymethylcellulose. It is evident that it would be therefore desirable to generally improve the behaviour of the reeds, possibly reducing the quantity discarded, and making them more stable, that is less sensitive to environmental changes. In addition, it would be desirable to increase the life of the reeds, or to reduce the need to purchase them, or to take advantage of a longer life of those that prove to be of better quality, possibly allowing greater preliminary selection without increasing the costs and the operations to prepare and select the pieces.

The objectives outlined above have been achieved by means of a method for the treatment of reeds of vegetable origin comprising the immersion, for an appropriate period of time of the said reed, in a liquid composition comprising acemannan or glucomannan or mixtures thereof. According to a preferred aspect, the liquid comprises one or more species of Aloe, in particular selected between Aloe Ferox, Aloe Arborescensis and Aloe Vera. Aloe juice contains acemannan and therefore can be used as source of the polysaccharide for the composition, alone or combined with polysaccharides from other sources, such as glucomannan of the commercial type, sold, for example, as dietary supplement. Aloe juice is also an adequate source of water for the production of a liquid composition suitable for the use described.

According to a preferred aspect, the composition also includes salivary enzymes, in particular lysozyme. According to a possible embodiment of the invention, these enzymes can be introduced in the form of suitable preparations such as gel or liquid saliva substitutes or saliva. An example of gel is Biotene ®.

Other possible components are antioxidants, in particular triglycerides. A possible component that contains them is Argan oil (oil extracted from the seeds of the Argania spinosa plant).

Further optional components include hyaluronic acid or its derivatives and amino acids. The said components are commonly present in compositions to treat oral mucosa (for example Aminogam ®), which, according to a particular aspect of the invention, can be employed to prepare the composition useful for the method according to the present invention, and can be advantageous since the reeds come into contact with the said mucosa.

Water may be added if ingredients that do not contain a sufficient amount are used; generally with the ingredients exemplified above however, this is not necessary.

Other components may be included such as bicarbonate, in particular sodium bicarbonate, as preservative (and in particular as fungistatic), or other types of preservatives, in particular for food use, dyes, or even flavourings. If the composition is not intended for immediate use or if it is stored in another appropriate manner, it is preferable to use a preservative, more preferably for food use, given the fact that the reed is in contact with the oral mucosa.

The content of the enclosed claims constitutes a particular aspect of the invention.

It has been noted that the composition has different types of effect. It can be used to prepare the reeds instead of using saliva to moisten them. It has the effect of preserving the reeds, extending their life compared to non-treated reeds that are simply moistened as is customary. It considerably improves the quality of the sound obtained and this also in the case of reeds already used previously, whose sound quality is already reduced, due to use and to the change in environmental conditions, in particular, reeds already used in customary ways, without being treated with the composition according to the present invention.

According to a possible way of proceeding, the reed is soaked with the composition, preferably by immersing it for a few minutes; this time may vary depending on the environmental temperature. For example at a temperature of 25°C, the reed must be immersed for at least one minute, at a temperature of 32°C the time can be extended to 15 minutes or more. It is a good idea to remove excess liquid from the reed after application, for example by rubbing it on a sheet of suitable material, such as cardboard or similar, which will not damage it. Some examples of compositions, which have been applied to reeds, then used by different musicians, are provided below. In the following examples the ingredients are added in the order indicated (Aloe, in the examples, is always intended as Aloe juice, extracted and immediately used; this method constitutes a preferred embodiment of production of the composition, that ensures the best properties, which might otherwise degrade quickly). The product obtained was also immediately applied to the reed, in particular reeds for clarinet.

### Example 1

- 20 ml of Aloe (Barbadensis miller)
- 20 ml of Biotene ®

### Example 2

- 20 ml of Aloe (Barbadensis Miller)
- 1 ml of pure Argan oil
- 5 ml ofBiotene ®

### Example 3

20 ml of Aloe (10 ml of Barbadensis Miller + 10 ml of Arborescens Miller)
- 1 g of glucomannan
- 5 ml of Biotene ®

### Example 4.

- 40 ml of Aloe (20 ml of Barbadensis Miller + 10 ml of Aloe Ferox + 10 ml of Arborescens Miller)
- 10 ml of Biotene ®
- 1 g of glucomannan
- 2 ml of Argan oil
- ½ teaspoon of sodium bicarbonate

### Example 5

- 120 ml of Aloe (20 ml of Barbadensis Miller + 10 ml of Aloe Ferox + 10 ml of Arborescens Miller)
- 40 ml of Biotene ®
- 3 g of glucomannan
- 2 ml of Argan oil
1 teaspoon of sodium bicarbonate

### Example 6

- 20 ml of Aloe Fcrox
- 20 ml of Aloe Arborescens Miller
- 20 ml ofBiotene ®
- 1 g of glucomannan
- 2 ml of Argan oil
- Aloe Barbadensis Miller as needed to make up 100 ml

### Example 7

40 ml of Biotene ®
1 g of glucomannan

### Example 8

120 ml of Aloe (40 ml of Aloe Vera + 40 ml of Aloe Arborescens Miller + 40 ml of Aloe Ferox)
40 ml of Biptene ®
3 g of glucomannan
1 ml of pure Argan oil
1/2 teaspoon of sodium bicarbonate
20 ml of Aminogam ®

It was found that the treatment appreciably improves the sound produced by the instrument, compared to reeds normally moistened with saliva; for example in the case of the clarinet the sound is softer and more harmonious. Furthermore, the reeds treated in this way proved to be less sensitive to environmental conditions, in particular to temperature and above all to humidity; they retained the best properties on different occasions, in which the untreated reeds usually show changes in behaviour to the extent that sometimes they need to be replaced. Finally, even with just one initial treatment, the life of the reeds was considerably extended, and in the case of the clarinet they can be used daily for a month or more, much longer than usual, unlike other treatment systems that require a number of immersions at intervals of a few days throughout the life of the reed. It was also noted that the composition in example 7, where the polysaccharide introduced is represented by glucomannan and Aloe juice is not present, still offers an improvement over simple moistening of the reed with saliva, and ensures an extended life of the reed. However, according to most musicians, where there was Aloe juice a better sound quality was obtained, and even better in the presence of Argan oil.

It should be noted that polysaccharides other than those listed above have not given satisfactory results, or have proved to be unsuitable for the said use or inconvenient to use. For example, compositions with carboxymethylcellulose instead of acemannan or glucomannan, generated problems of stickiness and required a much more accurate removal of the excess liquid. The results, in terms of sound quality, have proved to be less satisfactory compared to the use of compositions according to the teaching contained in this application.

The saliva gel replacement also favours the blending of the components and provides an adequate quantity of water. It was also noted that the compositions tested had regenerative properties as regards reeds that had already been used, raising the quality of the sound produced by the instrument even after it had dropped with use. The product obtained, in particular if without preservatives, can be preferably stored in a refrigerator (4-8 ° C) and should preferably be used within a few days.

According to a preferred aspect, the Aloe juice constitutes at least 40, preferably at least 50, more preferably at least 75% of the volume of the composition. According to a further preferred aspect, triglycerides, in particular from Argan oil, constitute between 0.5 and 2% of the volume. According to a further aspect of the invention, at least half a gram of glucomannan is present per 100 ml of the composition.

The compositions to be used, being intended for a treatment by immersion, must be substantially liquid, also to ensure impregnation. The compositions exemplified above have these properties. However, the possibility must not be excluded that products intended for the distribution thereof may be prepared, designed to generate a liquid composition, suitable for the method according to the invention, at the moment of use, for example by adding water or other suitable components.

## Claims

1. Method for the treatment of reeds of vegetable origin comprising the immersion, for an appropriate period of time of the said reed, in a liquid composition comprising acemannan or glucomannan or mixtures thereof.

2. Method according to claim 1, in which the said composition comprises juice of one or more species of Aloe, in particular selected between Aloe Ferox, Aloe Arborescensis, Aloe Vera.

3. Method according to claim 2, in which the Aloe juice constitutes at least 50%, optionally at least 75%, of the volume of the composition.

4. Method according to any previous claim, in which the said composition comprises also salivary enzymes, in particular lysozyme.

5. Method according to claim 4, in which the said composition comprises hyaluronic acid or its derivatives.

6. Method according to any previous claim, in which the said composition comprises triglycerides.

7. Method according to claim 6, in which the said composition comprises Argan oil (oil extracted from the seeds of the plant Argania spinosa).

8. Method according to any previous claim, in which the said composition comprises preservatives and optionally other additives for food use.

## Patentansprüche

1. Methode zur Behandlung von Schilfrohren pflanzlichen Ursprungs, einschließlich des Eintauchens, der genannten Schilfrohre über einen angemessenen Zeitraum in einer flüssigen Zusammensetzung, die Acemannan oder Glukomannan bzw. Mischungen aus diesen enthält.

2. Methode gemäß Anspruch 1, bei der die genannte Zusammensetzung Saft von einer oder mehreren Aloe-Arten enthält, die im Besonderen zwischen Aloe Ferox, Aloe Arborescensis und Aloe Vera ausgewählt wurden.

3. Methode gemäß Anspruch 2, bei der der Aloe-Saft mindestens 50%, wahlweise mindestens auch 75%, des Volumens der Zusammensetzung bildet.

4. Methode gemäß allen vorausgehenden Ansprüchen, bei der die genannte Zusammensetzung auch Speichelenzyme enthält, d.h. im Besonderen Lysozym.

5. Methode gemäß Anspruch 4, bei der die genannte Zusammensetzung Hyaluronsäure oder ihre Derivate enthält.

6. Methode gemäß allen vorausgehenden Ansprüchen, bei der die genannte Zusammensetzung Triglyzeride enthält.

7. Methode gemäß Anspruch 6, bei der die genannte Zusammensetzung Arganöl enthält (aus den Samen der Pflanze Argania spinosa extrahiertes öl).

8. Methode gemäß allen vorausgehenden Ansprüchen, bei der die genannte Zusammensetzung Konservierungsstoffe und wahlweise andere Zusätze zum Einsatz mit Lebensmitteln enthält.

## Revendications

1. Procédé pour le traitement des roseaux d'origine végétale comprenant l'immersion, pendant une période de temps appropriée dudit roseau, dans une composition liquide comprenant de l'acémannane ou du glucomannane ou des mélanges de ces derniers.

2. Procédé selon la revendication 1, dans lequel ladite composition comprend du jus d'une ou plusieurs espèces d'Aloe, en particulier sélectionné parmi l'Aloe Ferox, l'Aloe Arborescensis, l'Aloe Vera.

3. Procédé selon la revendication 2, dans lequel le jus d'Aloe constitue au moins 50 %, en option au moins 75 %, du volume de la composition.

4. Procédé selon l'une quelconque des revendications précédentes, dans lequel ladite composition comprend également des enzymes salivaires, en particulier le lysozyme.

5. Procédé selon la revendication 4, dans lequel ladite composition comprend de l'acide hyaluronique ou ses dérivés.

6. Procédé selon l'une quelconque des revendications précédentes, dans lequel ladite composition comprend des triglycérides.

7. Procédé selon la revendication 6, dans lequel ladite composition comprend de l'huile d'Argan (huiles extraites des graines de la plante Argania Spinosa).

8. Procédé selon l'une quelconque des revendications précédentes, dans lequel ladite composition comprend des conservateurs et en option d'autres additifs pour l'usage alimentaire.
